# EUROPÄISCHE PATENTSCHRIFT

(11) **EP 2 013 064 B1**
(45) Veröffentlichungstag und Bekanntmachung des Hinweises auf die Patenterteilung: **17.03.2010**
(21) Anmeldenummer: 07728299.4
(22) Anmeldetag: 19.04.2007
(51) Int. Cl.: B60T 13/575

(54) **PNEUMATISCHER BREMSKRAFTVERSTÄRKER**
PNEUMATIC BRAKE SERVO
SERVOFREIN PNEUMATIQUE

(30) Priorität: 25.04.2006 DE 102006019039; 30.06.2006 DE 102006030332; 20.07.2006 DE 102006033534
(43) Veröffentlichungstag der Anmeldung: 14.01.2009
(73) Patentinhaber: Continental Teves AG & Co. oHG, 60488 Frankfurt (DE)
(72) Erfinder: FALLER, Jürgen, 63796 Kahl (DE); LIND, Klaus, 61200 Wölfersheim (DE)
(86) Internationale Anmeldenummer: PCT/EP2007/053839
(87) Internationale Veröffentlichungsnummer: WO 2007/122176

(56) Entgegenhaltungen:
- EP-A1- 1 400 425
- DE-A1- 3 939 499
- DE-A1- 10 113 292

## Beschreibung

Die Erfindung betrifft einen pneumatischen Bremskraftverstärker mit einem Verstärkergehäuse, welches durch mindestens eine mit einem pneumatischen Differenzdruck beaufschlagbare axial bewegliche Wand in mindestens eine Arbeitskammer und mindestens eine Unterdruckkammer unterteilt ist, einem betätigbaren Eingangsglied umfassend einen Ventilkolben, einem Ausgangsglied zur Beaufschlagung eines Hauptbremszylinders mit einer Ausgangskraft, einem in einem Steuergehäuse angeordneten, durch den Ventilkolben betätigbaren Steuerventil, welches den Differenzdruck steuert, und einem elastischen Reaktionselement, welches in einer Steuergehäuseausnehmung angeordnet ist und an welchem ein Kopfflansch des Ausgangsgliedes anliegt, wobei das Eingangsglied mit einer Eingangswirkfläche und das Ausgangsglied mit einer Ausgangswirkfläche auf das Reaktionselement einwirkt und das Verhältnis Ausgangswirkfläche zu Eingangswirkfläche das Kraftübersetzungsverhältnis des Bremskraftverstärkers bestimmt.

Ein gattungsgemäßer Bremskraftverstärker ist beispielsweise aus der DE 42 27 879 A1 bekannt.

Von der Automobilindustrie werden hohe Anforderungen bezüglich der Bremskraftverstärkerkennlinie gestellt, d.h. die Toleranzen des Kraftübersetzungsverhältnisses, die sich durch die Toleranzen der Bauteile und der Federn sowie durch die Shorehärte des Reaktionselementes und durch Reibungen ergeben, sollen möglichst gering sein. Bekannte Bremskraftverstärker genügen diesen hohen Anforderungen jedoch nicht.

Demgemäß ist es Aufgabe der Erfindung, einen gattungsgemäßen Bremskraftverstärker mit sehr geringen bzw. genauen Toleranzen des Übersetzungsverhältnisses bereitzustellen.

Die Aufgabe wird dadurch gelöst, dass Mittel zum Einstellen der Ausgangswirkfläche bei zusammengebautem Bremskraftverstärkers vorgesehen sind. Dadurch können die Toleranzen der Bauteile und der Federn sowie die unterschiedlichen Shorehärten des Reaktionselementes sowie die Reibung ausgeglichen werden und die Übersetzung des Bremskraftverstärkers kann nach den Vorgaben der Automobilindustrie eingestellt und die geforderten Toleranzen können eingehalten werden. Ein weiterer Vorteil ergibt sich daraus, dass das Einstellen bzw. Ändern der Ausgangswirkfläche ebenso eine Änderung des Kraftübersetzungsverhältnisses des Bremskraftverstärkers ermöglicht.

Vorzugsweise ermöglichen die Mittel zum Einstellen der Ausgangswirkfläche eine Veränderung eines Kammervolumens des Reaktionselements, wobei das Kammervolumen des Reaktionselements durch das Ausgangsglied und direkt oder indirekt durch die Steuergehäuseausnehmung bestimmt ist. Es wird somit die Tatsache genutzt, dass sich das Fließverhalten des Reaktionselementes mit Veränderung des Kammervolumens ändert, da das Reaktionselement den Raum nicht gleichmäßig füllt.

In vorteilhafter Ausgestaltung der Erfindung weist das Ausgangsglied auf einer, dem Reaktionselement zugewandten Seite eine Gewindebohrung auf, in welche ein Einstellelement einschraubbar ist, wobei das Einstellelement ein Einstellen der Ausgangswirkfläche ermöglicht. Das Ausgangsglied ist damit mehrteilig aufgebaut und kann als vormontierte Einheit vorgesehen werden. Der Montageaufwand des Bremskraftverstärkers erhöht sich dadurch nicht.

Zur einfachen Einstellung der Ausgangswirkfläche weist das Ausgangsglied eine Durchgangsbohrung auf, welche in die Gewindebohrung mündet und durch welche ein Verstellwerkzeug zur Verdrehung des Einstellelementes einführbar ist.

Eine vorteilhafte Ausführungsform der Erfindung sieht vor, dass das Einstellelement einteilig ausgebildet ist und einen Gewindeabschnitt sowie einen schreibenförmigen Abschnitt aufweist, wobei das Ausgangsglied auf der dem Reaktionsglied zugewandten Seite eine Ausnehmung mit einem Durchmesser aufweist, in welcher der scheibenförmige Abschnitt des Einstellelementes geführt angeordnet ist. Das Einstellelement ist hierdurch im Ausgangsglied fixiert und ein Herausfallen ist nicht möglich.

Gemäß einer weiteren vorteilhaften Ausgestaltung der Erfindung ist das Einstellelement zweiteilig ausgebildet und umfasst eine Madenschraube und eine separate Scheibe, wobei das Ausgangsglied auf der dem Reaktionsglied zugewandten Seite eine Ausnehmung mit einem Durchmesser aufweist, in welcher die Scheibe angeordnet ist. Dadurch kann das Einstellelement kostengünstig aus genormten Einzelteilen bereitgestellt werden.

Zur einfachen Herstellung des Ausgangsgliedes ist der Durchmesser der Ausnehmung des Ausgangsgliedes größer vorgesehen ist als ein Durchmesser der Gewindebohrung des Ausgangsgliedes.

Um eine Verdrehung des Einstellelementes während des Betriebes des Bremskraftverstärkers zu verhindern, sind gemäß einer vorteilhaften Weiterbildung der Erfindung Mittel zur Verdrehsicherung des Einstellelementes vorgesehen sind.

Gemäß vorteilhaften Ausführungen der Erfindung sind die Mittel zur Verdrehsicherung des Einstellelementes entweder an der Gewindebohrung des Ausgangsgliedes oder an dem Gewindeabschnitt des Einstellelementes vorgesehen. Mit anderen Worten kann die Verdrehsicherung in Form eines hemmenden Gewindes vorgesehen sein.

Eine weitere vorteilhafte Ausführungsform der Erfindung sieht vor, dass das Einstellelement an einer dem Reaktionselement zugewandten Stirnseite eine aufgeraute Oberfläche aufweist. Vorteilhaft dabei ist, dass die Stirnseite des Einstellelementes zur Bearbeitung leicht zugänglich ist.

Ferner sieht eine weitere vorteilhafte Ausführungsform vor, dass das Einstellelement an einer dem Reaktionsglied zugewandten Stirnseite Ausnehmungen aufweist, welche vorzugsweise nutenförmig ausgebildet und an der Stirnseite gleichmäßig verteilt angeordnet sind. Die Ausnehmungen sind einfach und kostengünstig herstellbar.

Vorzugsweise ist das Ausgangsglied zweiteilig mit einem ersten und einen zweiten Bauteil ausgebildet, wobei das erste Bauteil den Kopfflansch und einen sich daran anschließenden ersten zylindrischen Abschnitt aufweist und das zweite Bauteil einen zweiten zylindrischen Abschnitt mit einem ersten, dem ersten Bauteil abgewandten, kugeligen Ende umfasst, und die zylindrischen Abschnitte sind miteinander verliersicher verbindbar. Damit ist die Einstellung des so genannten Funktionsmaßes des Bremskraftverstärkers in einfacher und kostengünstiger Weise möglich. Ferner ist es dadurch möglich, das erste Bauteil für unterschiedliche Ausführungen des Bremskraftverstärkers einzusetzen und lediglich das zweite Bauteil an die Maße des Bremskraftverstärkers anzupassen.

Gemäß einer vorteilhaften Ausführungsform weist das zweite Bauteil an seinem zweiten Ende einen topfförmigen Abschnitt auf, mittels welchem das zweite Bauteil mit dem ersten Bauteil verliersicher verbindbar ist.

Eine weitere vorteilhafte Ausführungsform sieht vor, dass das zweite Bauteil an seinem zweiten Ende einen Zapfen aufweist, welcher zur verliersicheren Verbindung mit dem ersten Bauteil in eine Durchgangsbohrung hineinragt.

Vorzugsweise ist die Verliersicherung mittels eines Rändels auf dem ersten Bauteil oder auf dem zweiten Bauteil oder mittels einer Gewindeverbindung zwischen dem ersten Bauteil und dem zweiten Bauteil vorgesehen.

Um einen Führungsteller einzusparen, weist der Kopfflansch gemäß einer vorteilhaften Weiterbildung der Erfindung am Umfang einen umlaufenden Bund zur Führung des Ausgangsliedes in der Steuergehäuseausnehmung auf.

Weiter sieht ein erfindungsgemäßes Verfahren zum Einstellen des Kraftübersetzungsverhältnisses eines Bremskraftverstärkers vor, dass das Einstellen der Ausgangswirkfläche in einem zusammengebauten Zustand des Bremskraftverstärkers erfolgt. Ein aufwendiges Austauschen von Bauteilen kann somit entfallen.

Weitere Merkmale und Vorteile der Erfindung gehen aus der nachfolgenden Beschreibung von Ausführungsbeispielen anhand der Zeichnung hervor. Es zeigt jeweils stark schematisiert sowie im Schnitt:
- Figur 1: eine Teilansicht eines bekannten Bremskraftverstärkers im Längsschnitt;
- Figur 2: einen Ausschnitt eines ersten Ausführungsbeispiels eines erfindungsgemäßen Bremskraftverstärkers im Längsschnitt;
- Figur 3: einen Ausschnitt eines zweiten Ausführungsbeispiels eines erfindungsgemäßen Bremskraftverstärkers im Längsschnitt;
- Figur 4: ein Einstellelement des zweiten Ausführungsbeispiels gemäß Fig. 3 in räumlicher Darstellung;
- Figur 5: einen Ausschnitt eines dritten Ausführungsbeispiels eines erfindungsgemäßen Bremskraftverstärkers im Längsschnitt;
- Figur 6: einen Ausschnitt eines vierten Ausführungsbeispiels eines erfindungsgemäßen Bremskraftverstärkers im Längsschnitt;
- Figur 7: einen Ausschnitt eines fünften Ausführungsbeispiels eines erfindungsgemäßen Bremskraftverstärkers im Längsschnitt;
- Figur 8: einen Ausschnitt eines sechsten Ausführungsbeispiels eines erfindungsgemäßen Bremskraftverstärkers im Längsschnitt und
- Figur 9: einen Ausschnitt eines siebten Ausführungsbeispiels eines erfindungsgemäßen Bremskraftverstärkers im Längsschnitt.

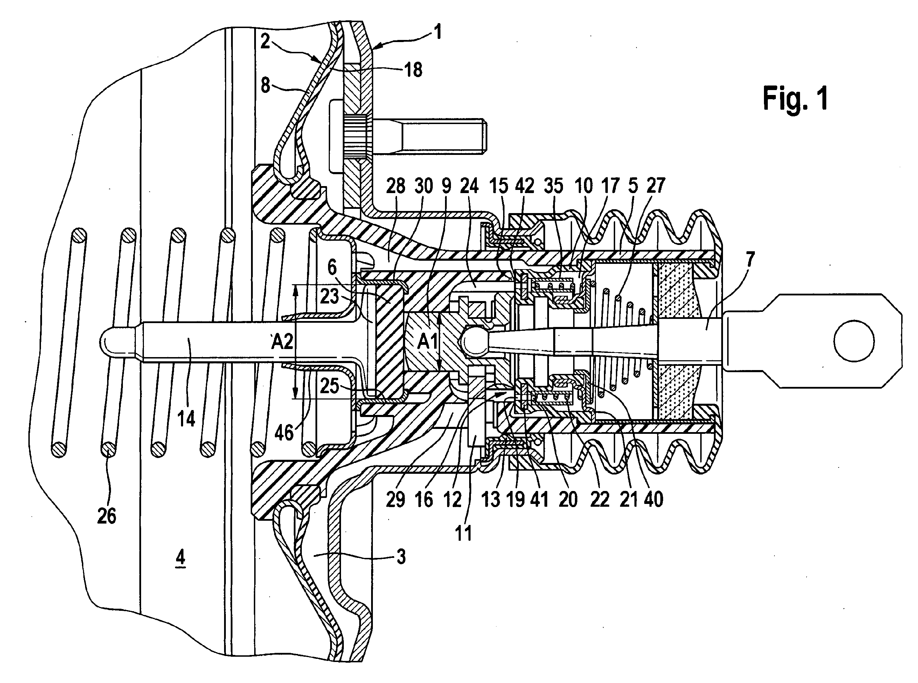

Das lediglich schematisch angedeutete Verstärkergehäuse 1 eines in Fig. 1 gezeigten bekannten pneumatischen Bremskraftverstärkers einer Kraftfahrzeugbremsanlage ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Membran als Abdichtung bildet.

Ein durch ein Eingangsglied 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit dem Eingangsglied 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Haltering 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar. Das Eingangsglied 7 ist mit einem nicht dargestellten Bremspedal verbunden.

Die Bremskraft wird über ein stirnseitig am Steuergehäuse 5 anliegendes gummi-elastisches Reaktionselement 6 sowie ein einen Kopfflansch 23 aufweisendes Ausgangsglied 14 auf einen Betätigungskolben eines nicht dargestellten Hauptzylinders der Bremsanlage übertragen, der am unterdruckseitigen Ende des Bremskraftverstärkers angebracht ist. Die an dem Eingangsglied 7 eingeleitete Eingangskraft wird auf das Reaktionselement 6 mittels des Ventilkolbens 9 übertragen.

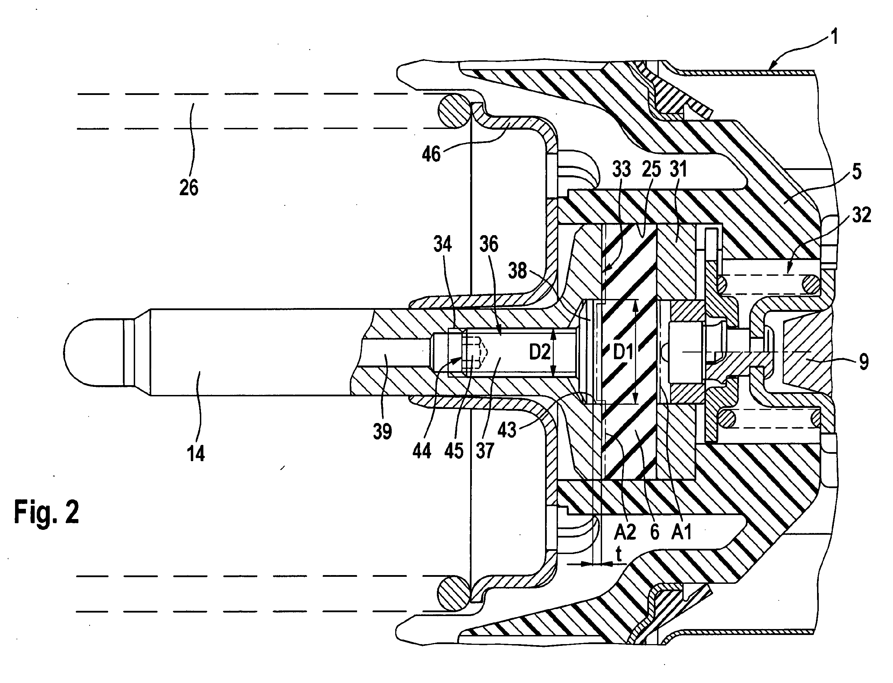

Das Reaktionselement 6 ist scheibenförmig aus Kunststoff- oder Gummiwerkstoff ausgebildet und verhält sich unter Druckbeanspruchung nach den Gesetzen der Hydrostatik wie ein inkompressibles Fluid. Das heißt es fungiert gewissermaßen als Summierer zwischen den, vom Ventilkolben 9 eingeleiteten Fußkräften, den über das Steuergehäuse 1 eingebrachten Verstärkungskräften sowie den Bremsreaktionskräften, welche über das Ausgangsglied 14 auf den Fahrzeugführer rück übertragen werden sollen. Folglich herrscht bei jeder Bremsbetätigungsstellung ein Kraftgleichgewicht an dem Reaktionselement 6. Ein Kammervolumen des Reaktionselements 6 wird wie ersichtlich durch eine Steuergehäuseausnehmung 25 bzw. einem darin angeordneten Ringelement 30 oder einer in Fig. 2 dargestellten ringförmigen Scheibe 31 und das Ausgangsglied 14 bestimmt. Die Anordnung des Ringelementes 30 ist nicht zwingend notwendig.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Ferner stützt sich die Rückstellfeder 26 an einem Führungsteller 46 ab, welcher am Steuergehäuse 5 anliegt bzw. an diesem befestigt ist und welcher zum einen der Abstützung der Rückstellfeder 26 und zum anderen der Führung des Ausgangsgliedes 14 dient. Außerdem ist eine Rückholfeder 27 vorgesehen, die zwischen dem Eingangsglied 7 und einem am Haltering 21 anliegenden, den Ventilkörper 10 am Haltering 21 sichernden Abstützring 40 angeordnet ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem das Steuergehäuse 5 im Verstärkergehäuse 1 abgedichtet führenden Gleitdichtring 13 anliegt.

Der Ventilkörper 10 weist eine mit den beiden Dichtsitzen 15,16 zusammenwirkende ringförmige Dichtfläche 42 auf, die mittels einer metallischen Versteifungsscheibe 41 versteift ist und mit mehreren axialen Durchlässen 19 versehen ist.

Im Steuergehäuse 5 ist ein pneumatischer Raum 17 begrenzt. In dem Ventilkörper 10 ist ein im Querschnitt U-förmig ausgebildetes, ringförmiges Versteifungselement 35 angeordnet, an dem die Ventilfeder 22 abgestützt ist und das mehrere, den Durchlässen 19 des Ventilkörpers 10 gegenüberliegend ausgebildete Öffnungen 20 aufweist. Die durch die Durchlässe 19 und die Öffnungen 20 gebildeten, näher nicht bezeichneten Strömungskanäle verbinden den pneumatischen Raum 17 mit einem durch die Dichtsitze 15,16 begrenzten Ringraum 24, in dem der oben erwähnte pneumatische Kanal 29 mündet, so dass der auf der der Dichtfläche 42 abgewandten Seite des Ventilkörpers 10 ausgebildete pneumatische Raum 17 ständig mit der Arbeitskammer 3 in Verbindung steht und am Ventilkörper 10 ein Druckausgleich stattfindet.

Weiter ist ersichtlich, dass das Eingangsglied 7 bzw. der mit dem Eingangsglied 7 verbundene Ventilkolben 9 mit einer Eingangswirkfläche A1 und das Ausgangsglied 14 mit einer Ausgangswirkfläche A2 auf das Reaktionselement 6 einwirkt und das Verhältnis Ausgangswirkfläche A2 zu Eingangswirkfläche A1 das Kraftübersetzungsverhältnis des Bremskraftverstärkers bestimmt. Allerdings ergeben sich durch die Toleranzen der Bauteile und der Federn sowie durch die Shorehärte des Reaktionselementes 6 und durch Reibungen Toleranzen des Kraftübersetzungsverhältnisses, welche den heutigen Anforderungen nicht mehr genügen. Daher ist es bei einem bekannten Bremskraftverstärker gemäß Fig. 1 notwendig, verschiedene Bauteile auszutauschen, um sehr enge Toleranzband beim Kraftübersetzungsverhältnisses, wie es die Automobilindustrie heutzutage fordert, einhalten zu können.

Die Funktionsweise und der grundsätzliche Aufbau des nachfolgend beschriebenen ersten Ausführungsbeispiels der Erfindung unterscheiden sich nicht von der Funktionsweise und von dem grundsätzlichen Aufbau dem gemäß Fig. 1 beschriebenen bekannten Bremskraftverstärkers, so dass lediglich die für die Erfindung wesentlichen Teile im Folgenden dargestellt und beschrieben werden. Gleiche Bauteile sind dabei mit gleichen Bezugszeichen versehen und werden nachstehend nicht mehr beschrieben. Ferner kann die beschriebene Erfindung in Bremskraftverstärkern in Single- sowie Tandem-Ausführung Verwendung finden.

Wie aus Fig. 2 ersichtlich ist, ist zwischen dem Ventilkolben 9 und dem Reaktionselement 6 eine Vorrichtung 32 zur Änderung der Eingangswirkfläche A1 bei einer vorgegebenen Eingangskraft vorgesehen, mittels welcher der Ventilkolben 9 in kraftübertragender Verbindung mit dem Reaktionselement 6 steht. Eine derartige Vorrichtung 32 zur Änderung der Eingangswirkfläche A1 ist bereits aus einer älteren Anmeldung der Anmelderin DE 101 44 619 A1 bekannt und für die Erfindung nicht wesentlich, so dass auf eine eingehende Beschreibung verzichtet wird. Die Eingangswirkfläche A1 bei der gezeigten Ausführungsform der Erfindung wird durch die Vorrichtung 32 gebildet, sie kann jedoch auch, wie gemäß Fig. 1, direkt am Ventilkolben 9 oder an einem zwischen Ventilkolben 9 und Reaktionselement 6 vorgesehenen Druckstück ausgebildet sein. Fig. 2 zeigt eine Teilansicht eines Ausführungsbeispiels eines erfindungsgemäßen pneumatischen Bremskraftverstärkers einer Kraftfahrzeugbremsanlage im Längsschnitt, wobei die Teilansicht lediglich die für die Erfindung wesentlichen Teile des Bremskraftverstärkers zeigt.

Von der Automobilindustrie werden hohe Anforderungen bezüglich der Bremskraftverstärkerkennlinie gestellt, d.h. die Toleranzen des Kraftübersetzungsverhältnisses, die sich durch die Toleranzen der Bauteile und der Federn sowie durch die Shorehärte des Reaktionselementes und durch Reibungen ergeben, sollen möglichst genau sein, d.h. das Toleranzband soll möglichst eng sein.

Wie ersichtlich ist, ist das Ausgangsglied 14 mehrteilig ausgeführt und weist auf einer, dem Reaktionselement 6 zugewandten Seite 33 eine Gewindebohrung 34 auf, in welche ein Einstellelement 36 eingeschraubt ist.

Das Einstellelement 36 kann, wie in Fig. 2 dargestellt, entweder einteilig ausgebildet sein und einen Gewindeabschnitt 37 sowie einen scheibenförmigen Abschnitt 38 aufweisen oder es kann zweiteilig mit einer Madenschraube und einer separaten Scheibe ausgestaltet sein. Die Ausgangswirkfläche A2 ergibt sich aus der Fläche, mit welcher das Reaktionselement 6 an dem Ausgangselement 14 und dem Einstellelement 36 anliegt.

Zur Einstellung des Kammervolumens des Reaktionselementes 6 und somit zur Einstellung der Ausgangswirkfläche A2, weist das Ausgangsglied 14 eine Durchgangsbohrung 39 auf, welche in die Gewindebohrung 34 mündet und durch welche ein Verstellwerkzeug zur Verdrehung des Einstellelementes 36 einführbar ist. Hierzu weist das Einstellelement 36 an einer dem Reaktionselement 6 abgewandten Seite 44 beispielsweise einen Innensechskant 45 auf.

Weiter ist Fig. 2 zu entnehmen, dass das Ausgangsglied 14 auf der dem Reaktionselement 6 zugewandten Seite 33 eine Ausnehmung 43 mit einem Durchmesser D1 aufweist, in welcher der scheibenförmige Abschnitt 38 bzw. die separate Scheibe des Einstellelementes 36 geführt angeordnet ist. Der Durchmesser D1 der Ausnehmung 43 ist größer vorgesehen als ein Durchmesser D2 der Gewindebohrung 34, um die Herstellung des Ausgangsgliedes 14 zu vereinfachen.

Durch die Einstellung der Ausgangswirkfläche A2 können die Toleranzen der Bauteile und der Federn sowie die unterschiedlichen Shorehärten des Reaktionselementes 6 sowie die Reibungen ausgeglichen werden und die Übersetzung des Bremskraftverstärkers kann exakt nach den Vorgaben der Automobilindustrie eingestellt werden. Somit können einerseits die geforderten Toleranzen ohne hohe Kosten und auf einfache Weise eingehalten werden, andererseits ist es jedoch auch möglich, das Kraftübersetzungsverhältnis des Bremskraftverstärkers durch Änderung der Ausgangswirkfläche A2 zu verändern.

Die Einstellung der Ausgangswirkfläche A2 erfolgt durch Anschließen des Bremskraftverstärkers an eine nicht gezeigte Unterdruckquelle, so dass im Verstärkergehäuse 1 ein bestimmter Betriebsdruck herrscht. Weiter wird der Bremskraftverstärker mit einer bestimmten Eingangskraft F_{E}, beispielsweise 200N beaufschlagt. Als Folge des anliegenden Vakuums und der genannten Einflüsse stellt sich eine bestimmte Ausgangskraft F_{A} ein und in dem Reaktionselement 6 stellt sich adäquat zu den herrschenden Kräften ein kraftrelevanter spezifischer Druck ein.

Das Einstellelement 36 wird bei der Montage mit einer bestimmten Tiefe t in das Ausgangsglied 14 eingeschraubt. Durch Verdrehen des Einstellelementes 36 wird das Kammervolumen des Reaktionselementes 6 verändert. Das Fließverhalten des Reaktionselementes 6 verändert sich bei unterschiedlichem Kammervolumen, da das Reaktionselement 6 den Raum nicht gleichmäßig füllt. Dadurch wird eine Veränderung der Ausgangswirkfläche A2 erzielt.

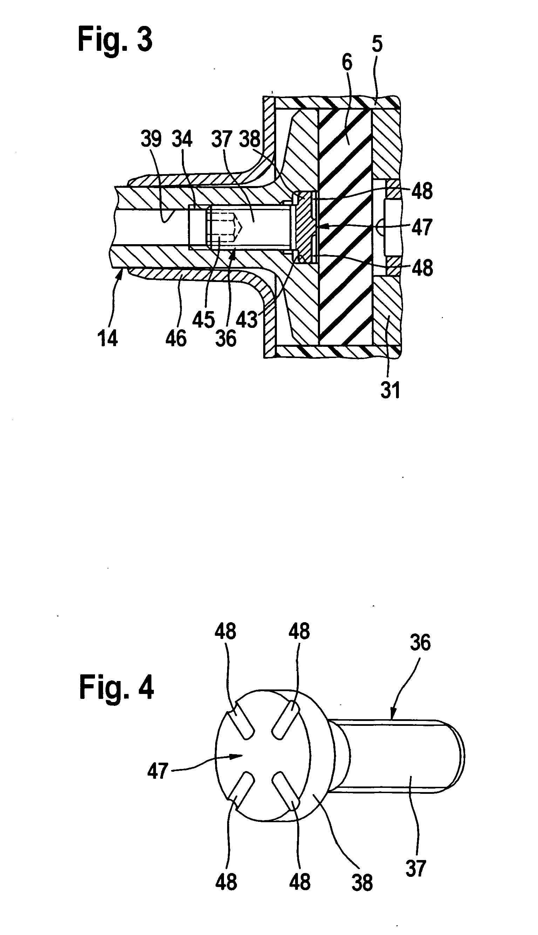

Fig. 3 und Fig. 4 zeigen ein zweites Ausführungsbeispiel eines erfindungsgemäßen Bremskraftverstärkers, wobei in Fig. 3 lediglich ein Ausschnitt des Bremskraftverstärkers im Längsschnitt dargestellt ist und Fig. 4 ein Einstellelement dieser Ausführungsform in räumlicher Darstellung zeigt. Das zweite Ausführungsbeispiel unterscheidet sich zum ersten Ausführungsbeispiel in der Ausgestaltung des Einstellelementes 36, so dass auf eine wiederholte Beschreibung der gleichen Bauteile verzichtet werden kann.

Wie insbesondere Fig. 4 zu entnehmen ist, weist der scheibenförmige Abschnitt 38 des Einstellelementes 36 auf einer dem Reaktionselement 6 zugewandten Stirnseite 47 zur Verdrehsicherung des Einstellelementes 36 nuten- bzw. kerbenförmige Ausnehmungen 48 auf. Dabei sind beispielsweise vier Ausnehmungen 48 vorgesehen, welche gleichmäßig verteilt an der Stirnseite 47 angeordnet sind. Die Ausnehmungen 48 verhindern ein Verdrehen des Einstellelementes 36 nach der oben beschriebenen Einstellung der Ausgangswirkfläche A2, da der Werkstoff des Reaktionselementes 6 durch den Druck, welcher sich im Reaktionselement 6 bei Betätigung des Bremskraftverstärkers einstellt, in die Ausnehmungen 48 fließt und so das Einstellelement 36 kontert. Somit erhöht sich mit Vergrößerung des Druckes im Reaktionselement 6 das erforderliche Drehmoment zum Verdrehen des Einstellelementes 36.

Die Ausnehmungen 48 sind derart ausgelegt, dass ein Verdrehen des Einstellelementes 36 während des beschriebenen Einstellvorganges noch möglich ist. Die Ausgestaltung der Ausnehmungen 48 als Nuten oder Kerben ist dabei nicht zwingend notwendig. Es ist ebenso denkbar, an der Stirnseite 47 eine aufgeraute Oberfläche vorzusehen.

Ferner ist es im Rahmen der Erfindung auch möglich, die Verdrehsicherung in Form eines hemmenden Gewindes vorzusehen, entweder an der Gewindebohrung 34 des Ausgangselementes oder an dem Gewindeabschnitt 37 des Einstellelementes 36.

Die nachfolgend beschriebenen Ausführungsbeispiele unterscheiden sich zu den ersten beiden Ausführungsbeispielen in der Ausgestaltung des Ausgangsgliedes 14, so dass lediglich jeweils das Ausgangsglied 14 beschrieben wird. Die restlichen Bauteile sind weitgehend gleich und sind daher mit den gleichen Bezugszeichen versehen. Zur Beschreibung wird auf die ersten beiden Ausführungsbeispiele verwiesen.

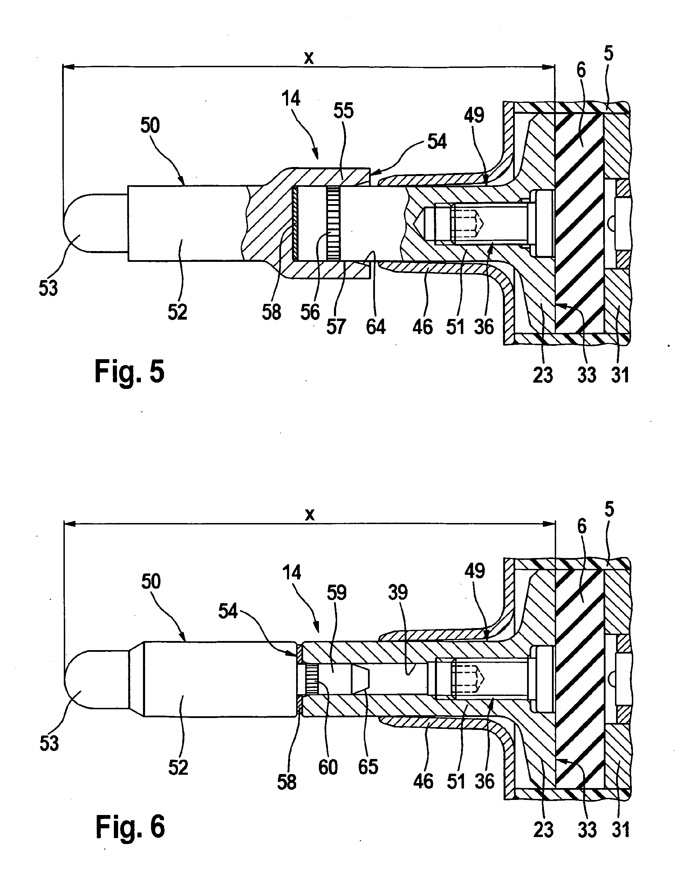

Fig. 5 zeigt einen Ausschnitt eines dritten Ausführungsbeispiels eines erfindungsgemäßen Bremskraftverstärkers im Längsschnitt. Wie ersichtlich ist, ist das Ausgangsglied 14 zweitteilig mit einem ersten und einen zweiten Bauteil 49, 50 ausgebildet.

Das erste Bauteil 49 weist den weiter oben beschriebenen Kopfflansch 23 und einen sich daran anschließenden ersten zylindrischen Abschnitt 51 auf. Weiter umfasst das zweite Bauteil 50 des Ausgangsgliedes 14 einen zweiten zylindrischen Abschnitt 52 mit einem ersten, dem ersten Bauteil 49 abgewandten, kugeligen Ende 53 und einem zweiten Ende 54 mit einem topfförmigen Abschnitt 55.

Wie aus Fig. 5 hervorgeht, weist der erste zylindrische Abschnitt 51 auf seiner Außenseite 57 ein Rändel 56 auf, mittels welchem die zylindrischen Abschnitte 51,52 der beiden Bauteile 49,50 verliersicher miteinander verbindbar sind.

Zur Montageerleichterung weist der topfförmige Abschnitt 55 auf seiner Innenseite eine Einführschräge 64 auf.

Ferner können zur Einstellung eines so genannten Funktionsmaßes x des Bremskraftverstärkers zwischen den beiden Bauteilen 49,50 eine oder mehrere Distanzscheiben 58 eingelegt werden.

Fig. 6 zeigt einen Ausschnitt eines vierten Ausführungsbeispiels eines erfindungsgemäßen Bremskraftverstärkers im Längsschnitt. Dieses unterscheidet sich zum dritten Ausführungsbeispiel gemäß Fig. 5 darin, dass das zweite Bauteil 50 an seinem zweiten Ende 54 einen Zapfen 59 mit einem Rändel 60 aufweist, welcher zur verliersicheren Verbindung mit dem ersten Bauteil 49 in die Durchgangsbohrung 39 hineinragt. An dem Zapfen 59 ist zur Montageerleichterung eine Einführschräge 65 vorgesehen.

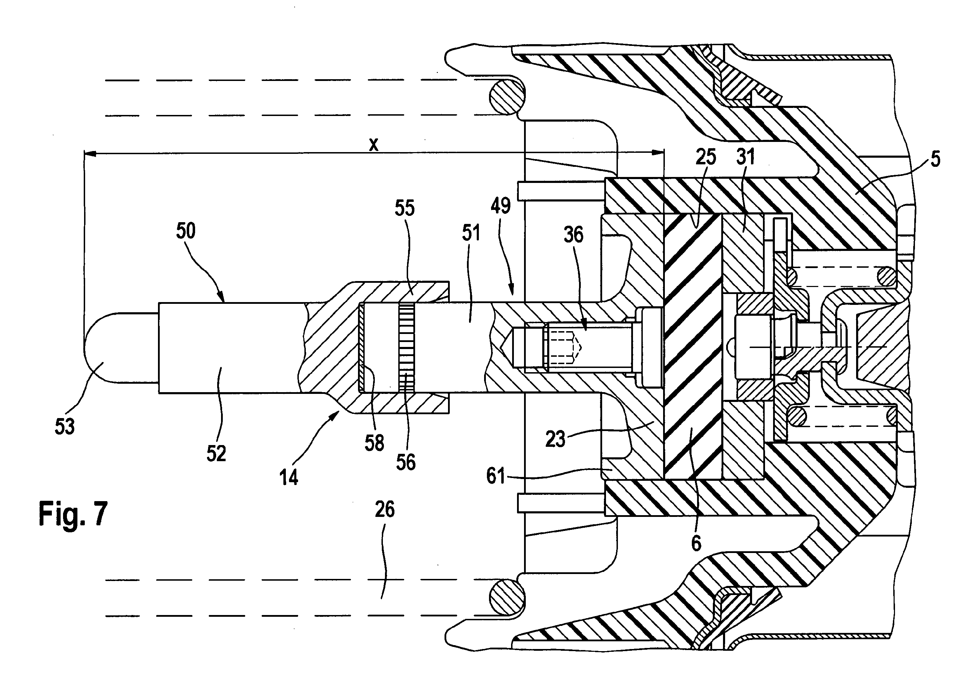

Fig. 7 zeigt einen Ausschnitt eines fünften Ausführungsbeispiels eines erfindungsgemäßen Bremskraftverstärkers im Längsschnitt. Dieses unterscheidet sich zum dritten Ausführungsbeispiel gemäß Fig. 5 darin, dass der Kopfflansch 23 am Umfang einen umlaufenden Bund 61 zur Führung des Ausgangsliedes 14 in der Steuergehäuseausnehmung 25 aufweist. Damit kann der Führungsteller 46 entfallen und die Rückstellfeder 26 liegt direkt am Steuergehäuse 5 an.

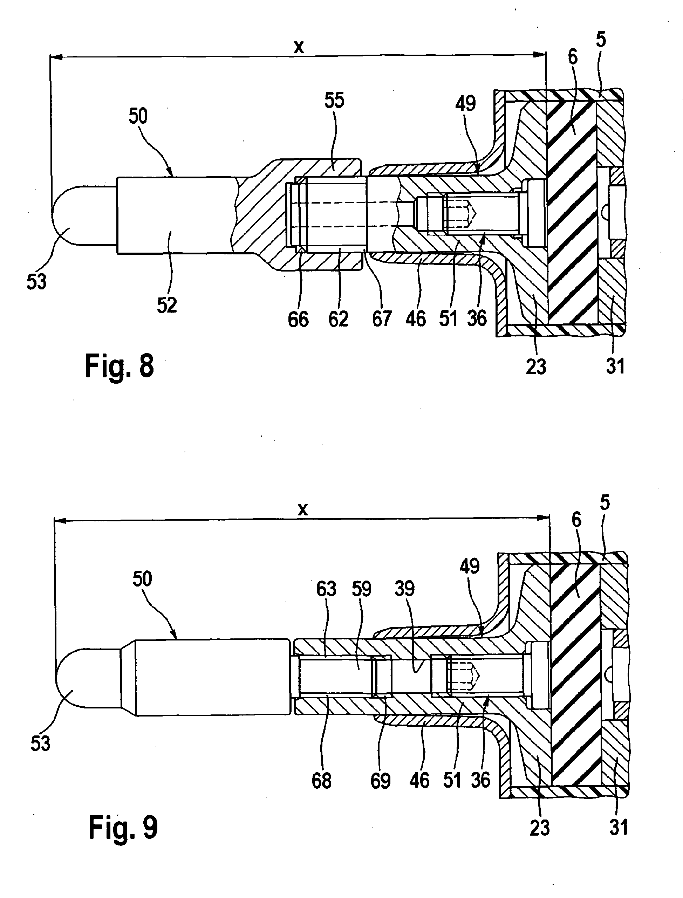

Fig. 8 zeigt einen Ausschnitt eines sechsten Ausführungsbeispiels eines erfindungsgemäßen Bremskraftverstärkers im Längsschnitt. Dieses unterscheidet sich zum dritten Ausführungsbeispiel gemäß Fig. 5 darin, dass die Verliersicherung mittels einer Gewindeverbindung 62 zwischen dem ersten Bauteil 49 und dem zweiten Bauteil 50 vorgesehen ist. Hierzu weist der topfförmige Abschnitt 55 ein Innengewinde 66 und der erste zylindrische Abschnitt 51 des ersten Bauteiles 49 ein Außengewinde 67 auf.

Fig. 9 zeigt einen Ausschnitt eines siebten Ausführungsbeispiels eines erfindungsgemäßen Bremskraftverstärkers im Längsschnitt. Dieses unterscheidet sich zum vierten Ausführungsbeispiel gemäß Fig. 6 darin, dass die Verliersicherung mittels einer Gewindeverbindung 63 zwischen dem ersten Bauteil 49 und dem zweiten Bauteil 50 vorgesehen ist. Wie ersichtlich ist, ist der Zapfen 59 hierzu mit einem Außengewinde 68 versehen und die Durchgangsbohrung 39 weist ein Innengewinde 69 auf.

Die Einstellung des Funktionsmaßes kann bei den letzten beiden Ausführungsbeispielen entweder mittels Distanzscheiben zwischen den beiden Bauteilen 49,50 erfolgen oder über die Gewindeverbindung 62,63 realisiert werden. Dabei sind die Gewindeverbindungen 62,63 selbsthemmend vorzusehen oder die Gewindeverbindungen 62,63 muss verstemmt werden.

### Bezugszeichenliste

- 1: Verstärkungsgehäuse
- 2: bewegliche Wand
- 3: Arbeitskammer
- 4: Unterdruckkammer
- 5: Steuergehäuse
- 6: Reaktionselement
- 7: Eingangsglied
- 8: Membranteller
- 9: Ventilkolben
- 10: Ventilkörper
- 11: Querglied
- 12: Steuerventil
- 13: Gleitdichtring
- 14: Ausgangsglied
- 15: Dichtsitz
- 16: Dichtsitz
- 17: Raum
- 18: Membran
- 19: Durchlass
- 20: Öffnung
- 21: Haltering
- 22: Ventilfeder
- 23: Kopfflansch
- 24: Ringraum
- 25: Steuergehäuseausnehmung
- 26: Rückstellfeder
- 27: Rückholfeder
- 28: Kanal
- 29: Kanal
- 30: Ringelement
- 31: Scheibe
- 32: Vorrichtung
- 33: Seite
- 34: Gewindebohrung
- 35: Versteifungselement
- 36: Einstellelement
- 37: Gewindeabschnitt
- 38: Abschnitt
- 39: Durchgangsbohrung
- 40: Abstützring
- 41: Versteifungsscheibe
- 42: Dichtfläche
- 43: Ausnehmung
- 44: Seite
- 45: Innensechskant
- 46: Führungsteller
- 47: Stirnseite
- 48: Ausnehmung
- 49: Bauteil
- 50: Bauteil
- 51: Abschnitt
- 52: Abschnitt
- 53: Ende
- 54: Ende
- 55: Abschnitt
- 56: Rändel
- 57: Außenseite
- 58: Distanzscheibe
- 59: Zapfen
- 60: Rändel
- 61: Bund
- 62: Gewindeverbindung
- 63: Gewindeverbindung
- 64: Einführschräge
- 65: Einführschräge
- 66: Innengewinde
- 67: Außengewinde
- 68: Außengewinde
- 69: Innengewinde

- A1: Eingangswirkfläche
- A2: Ausgangswirkfläche
- D1: Durchmesser
- D2: Durchmesser
- t: Tiefe
- x: Funktionsmaß

## Patentansprüche

1. Pneumatischer Bremskraftverstärker mit
- einem Verstärkergehäuse (1), welches durch mindestens eine mit einem pneumatischen Differenzdruck beaufschlagbare axial bewegliche Wand (2) in mindestens eine Arbeitskammer (3) und mindestens eine Unterdruckkammer (4) unterteilt ist,
- einem betätigbaren Eingangsglied (7) umfassend einen Ventilkolben (9),
- einem Ausgangsglied (14) zur Beaufschlagung eines Hauptbremszylinders mit einer Ausgangskraft,
- einem in einem Steuergehäuse (5) angeordneten, durch den Ventilkolben (9) betätigbaren Steuerventil (12), welches den Differenzdruck steuert, und
- einem elastischen Reaktionselement (6), welches in einer Steuergehäuseausnehmung (25) angeordnet ist und an welchem ein Kopfflansch (23) des Ausgangsgliedes (14) anliegt,
- wobei das Eingangsglied (7) mit einer Eingangswirkfläche (A1) und das Ausgangsglied (14) mit einer Ausgangswirkfläche (A2) auf das Reaktionselement (6) einwirkt und das Verhältnis Ausgangswirkfläche (A2) zu Eingangswirkfläche (A1) das Kraftübersetzungsverhältnis des Bremskraftverstärkers bestimmt,
**dadurch gekennzeichnet, dass**
Mittel zum Einstellen der Ausgangswirkfläche (A2) bei zusammengebautem Bremskraftverstärker vorgesehen sind.

2. Bremskraftverstärker nach Anspruch 1, **dadurch gekennzeichnet, dass** die Mittel zum Einstellen der Ausgangswirkfläche (A2) eine Veränderung eines Kammervolumens des Reaktionselements (6) ermöglichen, wobei das Kammervolumen des Reaktionselements (6) durch das Ausgangsglied (14) und direkt oder indirekt durch die Steuergehäuseausnehmung (25) bestimmt ist.

3. Bremskraftverstärker nach Anspruch 2, **dadurch gekennzeichnet, dass** das Ausgangsglied (14) auf einer, dem Reaktionselement (6) zugewandten Seite (33) eine Gewindebohrung (34) aufweist, in welche ein Einstellelement (36) einschraubbar ist, wobei das Einstellelement (36) ein Einstellen der Ausgangswirkfläche (A2) ermöglicht.

4. Bremskraftverstärker nach Anspruch 3, **dadurch gekennzeichnet, dass** das Ausgangsglied (14) eine Durchgangsbohrung (39) aufweist, welche in die Gewindebohrung (34) mündet und durch welche ein Verstellwerkzeug zur Verdrehung des Einstellelementes (36) einführbar ist.

5. Bremskraftverstärker nach Anspruch 4, **dadurch gekennzeichnet, dass** das Einstellelement (36) einteilig ausgebildet ist und einen Gewindeabschnitt (37) sowie einen schreibenförmigen Abschnitt (38) aufweist, wobei das Ausgangsglied (14) auf der dem Reaktionsglied (6) zugewandten Seite (33) eine Ausnehmung (43) mit einem Durchmesser (D1) aufweist, in welcher der scheibenförmige Abschnitt (38) des Einstellelementes (36) geführt angeordnet ist.

6. Bremskraftverstärker nach Anspruch 4, **dadurch gekennzeichnet, dass** das Einstellelement (36) zweiteilig ausgebildet ist und eine Madenschraube und eine separate Scheibe umfasst, wobei das Ausgangsglied (14) auf der dem Reaktionsglied (6) zugewandten Seite (33) eine Ausnehmung (43) mit einem Durchmesser (D1) aufweist, in welcher die Scheibe angeordnet ist.

7. Bremskraftverstärker nach Anspruch 5 oder 6, **dadurch gekennzeichnet, dass** der Durchmesser (D1) der Ausnehmung (43) des Ausgangsgliedes (14) größer vorgesehen ist als ein Durchmesser (D2) der Gewindebohrung (34) des Ausgangsgliedes (14).

8. Bremskraftverstärker nach Anspruch 7, **dadurch gekennzeichnet, dass** Mittel zur Verdrehsicherung des Einstellelementes (36) vorgesehen sind.

9. Bremskraftverstärker nach Anspruch 8, **dadurch gekennzeichnet, dass** die Mittel zur Verdrehsicherung des Einstellelementes (36) an der Gewindebohrung (34) des Ausgangsgliedes (14) vorgesehen sind.

10. Bremskraftverstärker nach Anspruch 8, **dadurch gekennzeichnet, dass** die Mittel zur Verdrehsicherung des Einstellelementes (36) an dem Gewindeabschnitt (37) des Einstellelementes (36) vorgesehen sind.

11. Bremskraftverstärker nach Anspruch 8, **dadurch gekennzeichnet, dass** das Einstellelement (36) an einer dem Reaktionselement (6) zugewandten Stirnseite (47) eine aufgeraute Oberfläche aufweist.

12. Bremskraftverstärker nach Anspruch 8, **dadurch gekennzeichnet, dass** das Einstellelement (36) an einer dem Reaktionsglied (6) zugewandten Stirnseite (47) Ausnehmungen (48) aufweist.

13. Bremskraftverstärker nach Anspruch 12, **dadurch gekennzeichnet, dass** die Ausnehmungen (48) nutenförmig ausgebildet sind und an der Stirnseite (47) gleichmäßig verteilt angeordnet sind.

14. Bremskraftverstärker nach einem der vorangegangenen Ansprüche, **dadurch gekennzeichnet, dass** das Ausgangsglied zweiteilig mit einem ersten und einen zweiten Bauteil (49, 50) ausgebildet ist, wobei das erste Bauteil den Kopfflansch (23) und einen sich daran anschließenden ersten zylindrischen Abschnitt (51) aufweist und das zweite Bauteil (50) einen zweiten zylindrischen Abschnitt (52) mit einem ersten, dem ersten Bauteil (49) abgewandten, kugeligen Ende (53) umfasst, und dass die zylindrischen Abschnitte (51,52) miteinander verliersicher verbindbar sind.

15. Bremskraftverstärker nach Anspruch 14, **dadurch gekennzeichnet, dass** das zweite Bauteil (50) an seinem zweiten Ende (54) einen topfförmigen Abschnitt (55) aufweist, mittels welchem das zweite Bauteil (50) mit dem ersten Bauteil (49) verliersicher verbindbar ist.

16. Bremskraftverstärker nach Anspruch 14, **dadurch gekennzeichnet, dass** das zweite Bauteil (50) an seinem zweiten Ende (54) einen Zapfen (59) aufweist, welcher zur verliersicheren Verbindung mit dem ersten Bauteil (49) in eine Durchgangsbohrung (39) hineinragt.

17. Bremskraftverstärker nach Anspruch 15 oder 16, **dadurch gekennzeichnet, dass** die Verliersicherung mittels eines Rändels (56;60) auf dem ersten Bauteil (49) oder auf dem zweiten Bauteil (50) vorgesehen ist.

18. Bremskraftverstärker nach Anspruch 15 oder 16, **dadurch gekennzeichnet, dass** die Verliersicherung mittels einer Gewindeverbindung (62;63) zwischen dem ersten Bauteil (49) und dem zweiten Bauteil (50) vorgesehen ist.

19. Bremskraftverstärker nach einem der Ansprüche 14 bis 18, **dadurch gekennzeichnet, dass** der Kopfflansch (23) am Umfang einen umlaufenden Bund (61) zur Führung des Ausgangsliedes (14) in der Steuergehäuseausnehmung (25) aufweist

20. Bremskraftverstärker nach einem der Ansprüche 14 bis 18, **dadurch gekennzeichnet, dass** zur Einstellung eines Funktionsmaßes (x) des Bremskraftverstärkers zwischen dem ersten und dem zweiten Bauteil (49,50) Distanzscheiben (58) einlegbar sind.

21. Verfahren zum Einstellen des Kraftübersetzungsverhältnisses eines Bremskraftverstärkers nach einem der vorangegangenen Ansprüche, **dadurch gekennzeichnet, dass** das Einstellen der Ausgangswirkfläche in einem zusammengebauten Zustand des Bremskraftverstärkers erfolgt.

## Claims

1. Pneumatic brake servo, having
- a servo housing (1) which is divided by at least one axially movable wall (2), which can be acted on by a pneumatic differential pressure, into at least one working chamber (3) and at least one vacuum chamber (4),
- an actuable input member (7) comprising a valve piston (9),
- an output member (14) for acting on a master brake cylinder with an output force,
- a control valve (12) which is arranged in a control housing (5) and which can be actuated by the valve piston (9) and which controls the differential pressure, and
- an elastic reaction element (6) which is arranged in a control housing recess (25) and against which a head flange (23) of the output member (14) bears,
- with the input member (7) acting with an input effective area (A1), and the output member (14) acting with an output effective area (A2), on the reaction element (6), and the ratio of output effective area (A2) to input effective area (A1) determining the force boost ratio of the brake servo,
**characterized in that**
means are provided for adjusting the output effective area (A2) in the assembled brake servo.

2. Brake servo according to Claim 1, **characterized in that** the means for adjusting the output effective area (A2) permit a change in a chamber volume of the reaction element (6), with the chamber volume of the reaction element (6) being determined by the output member (14) and directly or indirectly by the control housing recess (25).

3. Brake servo according to Claim 2, **characterized in that** the output element (14) has, on a side (33) facing toward the reaction element (6), a threaded bore (34) into which an adjusting element (36) can be screwed, with the adjusting element (36) permitting an adjustment of the output effective area (A2).

4. Brake servo according to Claim 3, **characterized in that** the output element (14) has a passage bore (39) which opens out into the threaded bore (34) and through which an adjusting tool for rotating the adjusting element (36) can be inserted.

5. Brake servo according to Claim 4, **characterized in that** the adjusting element (36) is formed in one piece and has a threaded section (37) and a disk-shaped section (38), with the output member (14) having, on the side (33) facing toward the reaction member (6), a recess (43) with a diameter (D1), with the disk-shaped section (38) of the adjusting element (36) being arranged so as to be guided in said recess (43).

6. Brake servo according to Claim 4, **characterized in that** the adjusting element (36) is formed in two parts and comprises a set screw and a separate disk, with the output element (14) having, on the side (33) facing toward the reaction member (6), a recess (43) with a diameter (D1), in which recess (43) the disk is arranged.

7. Brake servo according to Claim 5 or 6, **characterized in that** the diameter (D1) of the recess (43) of the output member (14) is greater than a diameter (D2) of the threaded bore (34) of the output member (14).

8. Brake servo according to Claim 7, **characterized in that** means for rotationally locking the adjusting element (36) are provided.

9. Brake servo according to Claim 8, **characterized in that** the means for rotationally locking the adjusting element (36) are provided on the threaded bore (34) of the output member (14).

10. Brake servo according to Claim 8, **characterized in that** the means for rotationally locking the adjusting element (36) are provided on the threaded section (37) of the adjusting element (36).

11. Brake servo according to Claim 8, **characterized in that** the adjusting element (36) has a roughened surface on an end side (47) facing toward the reaction element (6).

12. Brake servo according to Claim 8, **characterized in that** the adjusting element (36) has recesses on an end side (47) facing toward the reaction member (6).

13. Brake servo according to Claim 12, **characterized in that** the recesses (48) are formed in the manner of grooves and are arranged so as to be distributed uniformly on the end side (47).

14. Brake servo according to one of the preceding claims, **characterized in that** the output member is formed in two parts with a first and a second component (49, 50), with the first component having the head flange (23) and a first cylindrical section (51) which adjoins said head flange (23), and the second component (50) having a second cylindrical section (52) with a first spherical end (53) which faces away from the first component (49), and **in that** the cylindrical sections (51, 52) can be captively connected to one another.

15. Brake servo according to Claim 14, **characterized in that** the second component (50) has, on its second end (54), a pot-shaped section (55), by means of which the second component (50) can be captively connected to the first component (49).

16. Brake servo according to Claim 14, **characterized in that** the second component (50) has, on its second end (54), a journal (59) which, for the captive connection to the first component (49), projects into a passage bore (39).

17. Brake servo according to Claim 15 or 16, **characterized in that** the captive connection is provided by means of a knurl (56; 60) on the first component (49) or on the second component (50).

18. Brake servo according to Claim 15 or 16, **characterized in that** the captive connection is provided by means of a threaded connection (62;63) between the first component (49) and the second component (50).

19. Brake servo according to one of Claims 14 to 18, **characterized in that** the head flange (23) has, at the circumference, an encircling collar (61) for guiding the output element (14) in the control housing recess (25).

20. Brake servo according to one of Claims 14 to 18, **characterized in that**, to adjust a functional dimension (x) of the brake servo, spacer disks (58) can be inserted between the first and the second component (49, 50).

21. Method for adjusting the force boost ratio of a brake servo according to one of the preceding claims, **characterized in that** the adjustment of the output effective area A2 takes place in an assembled state of the brake servo.

## Revendications

1. Servofrein pneumatique, comprenant :
- un boîtier de servofrein (1), qui est divisé par au moins une paroi (2) déplaçable axialement et pouvant être sollicitée par une pression pneumatique différentielle en au moins une chambre de travail (3) et au moins une chambre de dépression (4),
- un organe d'entrée actionnable (7) comprenant un piston de soupape (9),
- un organe de sortie (14) pour solliciter un cylindre de frein principal avec une force de sortie,
- une soupape de commande (12) disposée dans un boîtier de commande (5), pouvant être actionnée par le piston de soupape (9), qui commande la pression différentielle, et
- un élément de réaction élastique (6), qui est disposé dans un logement (25) du boîtier de commande et contre lequel s'applique une bride de tête (23) de l'organe de sortie (14),
- l'organe d'entrée (7) agissant avec une surface d'action d'entrée (A1) et l'organe de sortie (14) agissant avec une surface d'action de sortie (A2) sur l'élément de réaction (6) et le rapport entre la surface d'action de sortie (A2) et la surface d'action d'entrée (A1) déterminant le rapport de transfert de force du servofrein,
**caractérisé en ce que**
des moyens sont prévus pour ajuster la surface d'action de sortie (A2) lorsque le servofrein est assemblé.

2. Servofrein selon la revendication 1, **caractérisé en ce que** les moyens pour ajuster la surface d'action de sortie (A2) permettent une variation d'un volume de chambre de l'élément de réaction (6), le volume de chambre de l'élément de réaction (6) étant déterminé par l'organe de sortie (14) et directement ou indirectement par le logement (25) du boîtier de commande.

3. Servofrein selon la revendication 2, **caractérisé en ce que** l'organe de sortie (14) présente, sur un côté (33) tourné vers l'élément de réaction (6), un alésage fileté (34), dans lequel un élément d'ajustement (36) peut être vissé, l'élément d'ajustement (36) permettant un ajustement de la surface d'action de sortie (A2).

4. Servofrein selon la revendication 3, **caractérisé en ce que** l'organe de sortie (14) présente un alésage traversant (39), qui débouche dans l'alésage fileté (34) et à travers lequel un outil de réglage peut être introduit pour faire tourner l'élément d'ajustement (36).

5. Servofrein selon la revendication 4, **caractérisé en ce que** l'élément d'ajustement (36) est réalisé d'une seule pièce et présente une portion filetée (37) ainsi qu'une portion en forme de rondelle (38), l'organe de sortie (14) présentant, du côté (33) tourné vers l'organe de réaction (6), un évidement (43) avec un diamètre (D1), dans lequel la portion en forme de rondelle (38) de l'élément d'ajustement (36) est disposée de manière guidée.

6. Servofrein selon la revendication 4, **caractérisé en ce que** l'élément d'ajustement (36) est réalisé en deux parties et comprend un goujon fileté et une rondelle séparée, l'organe de sortie (14) présentant, du côté (33) tourné vers l'organe de réaction (6), un évidement (43) avec un diamètre (D1) dans lequel est disposée la rondelle.

7. Servofrein selon la revendication 5 ou 6, **caractérisé en ce que** le diamètre (D1) de l'évidement (43) de l'organe de sortie (14) est plus grand qu'un diamètre (D2) de l'alésage fileté (34) de l'organe de sortie (14).

8. Servofrein selon la revendication 7, **caractérisé en ce que** des moyens pour la fixation en rotation de l'élément d'ajustement (36) sont prévus.

9. Servofrein selon la revendication 8, **caractérisé en ce que** les moyens pour la fixation en rotation de l'élément d'ajustement (36) sont prévus sur l'alésage fileté (34) de l'organe de sortie (14).

10. Servofrein selon la revendication 8, **caractérisé en ce que** les moyens pour la fixation en rotation de l'élément d'ajustement (36) sont prévus sur la portion filetée (37) de l'élément d'ajustement (36).

11. Servofrein selon la revendication 8, **caractérisé en ce que** l'élément d'ajustement (36) présente, sur un côté frontal (47) tourné vers l'élément de réaction (6), une surface rendue rugueuse.

12. Servofrein selon la revendication 8, **caractérisé en ce que** l'élément d'ajustement (36) présente des évidements (48) sur un côté frontal (47) tourné vers l'organe de réaction (6).

13. Servofrein selon la revendication 12, **caractérisé en ce que** les évidements (48) sont réalisés en forme de rainures et sont disposés de manière répartie uniformément sur le côté frontal (47).

14. Servofrein selon l'une quelconque des revendications précédentes, **caractérisé en ce que** l'organe de sortie est réalisé en deux parties avec un premier et un deuxième composant (49, 50), le premier composant présentant la bride de tête (23) et une première portion cylindrique (51) s'y raccordant et le deuxième composant (50) présentant une deuxième portion cylindrique (52) avec une première extrémité sphérique (53) opposée au premier composant (49), et **en ce que** les portions cylindriques (51, 52) peuvent être connectées l'une à l'autre de manière imperdable.

15. Servofrein selon la revendication 14, **caractérisé en ce que** le deuxième composant (50) présente à sa deuxième extrémité (54) une portion en forme de pot (55) au moyen de laquelle le deuxième composant (50) peut être connecté de manière imperdable au premier composant (49).

16. Servofrein selon la revendication 14, **caractérisé en ce que** le deuxième composant (50) présente à sa deuxième extrémité (54) un tourillon (59) qui pénètre dans un alésage traversant (39) pour la connexion imperdable au premier composant (49).

17. Servofrein selon la revendication 15 ou 16, **caractérisé en ce que** la protection imperdable est prévue au moyen d'un bord (56 ; 60) sur le premier composant (49) ou sur le deuxième composant (50).

18. Servofrein selon la revendication 15 ou 16, **caractérisé en ce que** la protection imperdable est prévue au moyen d'une connexion filetée (62 ; 63) entre le premier composant (49) et le deuxième composant (50).

19. Servofrein selon l'une quelconque des revendications 14 à 18, **caractérisé en ce que** la bride de tête (23) présente à la circonférence un épaulement périphérique (61) pour le guidage de l'organe de sortie (14) dans l'évidement (25) du boîtier de commande.

20. Servofrein selon l'une quelconque des revendications 14 à 18, **caractérisé en ce que** pour l'ajustement d'une dimension fonctionnelle (x) du servofrein on peut intercaler des rondelles d'espacement (58) entre le premier et le deuxième composant (49, 50).

21. Procédé pour ajuster le rapport de transfert de force d'un servofrein selon l'une quelconque des revendications précédentes, **caractérisé en ce que** l'ajustement de la surface active de sortie s'effectue dans un état assemblé du servofrein.
